# EUROPEAN PATENT APPLICATION

(11) **EP 0 670 557 A2**
(43) Date of publication of application: **06.09.1995**
(21) Application number: 95200512.2
(22) Date of filing: 02.03.1995
(51) Int. Cl.: G06K 7/08

(54) **Reader for cheques or similar documents, incorporated in a keyboard for electronic data processors**

(30) Priority: 03.03.1994 IT MI940144 U
(71) Applicant: Piazza, Attilio, I-20129 Milan (IT)
(72) Inventor: Piazza, Attilio, I-20129 Milan (IT)
(74) Representative: Michelotti, Giuliano

(57) **Abstract**

A keyboard (10) for an electronic data processor has incorporated in it a reader (40) for cheques or other documents, said reader being housed on a printed circuit board (42), or a frame of the said keyboard, which is already used for housing the circuits of the itself keyboard (10). This reader is formed by providing a slot (24) in a area of the casing (12) of the keyboard (10) which can be easily accessed (for example at the top of the casing), where said slot starts from one side of the keyboard (10) and ends in a compartment or storage space (32) provided with a support surface (66) onto which the cheques (26) read by the reader (40) fall and are stacked, stacking of the cheques occurring after each cheque expelled from the slot (24) falls, guided by an inclined profile (68), so as to be positioned on the support surface (66) of the compartment (32). A printed circuit board (42), or the frame, has mounted on it, in an area located underneath the slot (24), means (44) for moving the cheques, the means consisting of a first row (46ₐ, 46'ₐ, 46_{b}, 46_{c}) of rollers driven by drive means, such as a belt (48), one of which is moved by motor means (50) actuated when a cheque is entered into the slot (24), and means for reading the cheque consisting of a magnetizing head (60) and a reading head (62).

The reading means can also consist of a head (64) for the optical reading of alphanumeric characters or the like.

## Description

The present invention consists of an electronic reader for cheques, or similar documents, incorporated in a keyboard used for controlling an electronic processor.

At present many workstations in banks and other organizations are equipped with an electronic processor used for receiving and processing data relating to banking documents such as cheques, bank receipts, bills of exchange, etc. Consequently it is often the case that these workstations must have, in addition to an electronic data processor with its display and keyboard, one of those readers for cheques or similar documents, which are now very common in banks. Usually said reader must enter immediately the data which it reads into the said processor, so that it is necessary for the computer to have a port available for connection to the reader.

Furthermore, the cheque reader must be of a certain size which cannot be reduced beyond certain limits, so that a desk or cash-till area must have enough space for the reader as well, in addition to the other accesories of the processor, such as the keyboard and display.

It is an object of the present invention to incorporate a reader for cheques or the like into a keyboard of an electronic data processor in order to achieve the dual aim of no longer having to use a port of the processor, eliminating the space normally occupied by the said reader and unifying in a single electronic circuit all the logic systems of the keyboard and various kinds of reading operation for cheques and other documents.

Another object is to provide the aforementioned keyboard with a compartment or storage space inside which the documents read by the reader can be accumulated so that they can be removed all together after they have been read.

Said objects are achieved by the present invention which consists in a reading mechanism housed on a printed circuit board, normally containing the circuit components of an electronic processing keyboard, or on a frame thereof, positioned inside the protective housing of the said keyboard underneath a linear slot which starts from one side of the keyboard and ends on the opposite side, the reading mechanism comprising a roller and belt driver, moved by a motor, and a reading head assembly.

In particular, the roller driver comprises a plurality of rollers actuated by a belt, one of which is moved directly by a motor and the others driven by the belt which encompasses all of them, each of said driven rollers being arranged opposite an idle roller kept resiliently pressed against it, the said driver operating for moving a cheque or similar document, keeping it substantially taut, at a substantially constant speed in front of the reading heads.

More particularly, the reading head of the present invention uses magnetic reading means consisting of a magnetizing head and a reading head.

Alternatively the reading mechanism of the present invention uses an optical head for reading bar codes.

Further alternatively the reading mechanism of the present invention uses an optical head for reading characters.

Furthermore, the reading mechanism can use simultaneously all the kinds of reading operation, or some of them, in various combinations.

In addition, the slot on the casing corresponding to the driver mechanism emerges inside a compartment, or storage space, formed as a recess in the said casing, which operates to accommodate the cheques or similar documents following reading until subsequent removal for forwarding.

In particular, the compartment or storage space is provided with a support surface, inclined towards the inside of the said keyboard, which gathers together the read documents.

In addition, the said compartment has its support surface located lower down with respect to the bottom of the linear slot formed in the keyboard casing and is moreover provided with an inclined profile which guides the document expelled from the slot such that it is positioned on the support surface always on the same side.

The essential features of this invention will be defined in the claims appended to the present specification.

However, other features and advantages will be disclosed by the following detailed description of an embodiment thereof, which is not to be regarded as limiting in any way, with the accompanying drawings, in which:
- Figure 1 is a perspective view of a reader for banking documents, such as cheques, incorporated in an electronic processor keyboard according to the present invention;
- Figure 2 is a plan view, partially cut-away and fairly detailed, of a driving mechanism according to the present invention;
- Figure 3 is a side view of a keyboard containing the reader according to the present invention, showing in particular the compartment or storage space inside which the read documents are stacked before being picked up; and
- Figure 4 shows an alternative embodiment of the compartment inside which the read documents are stacked.

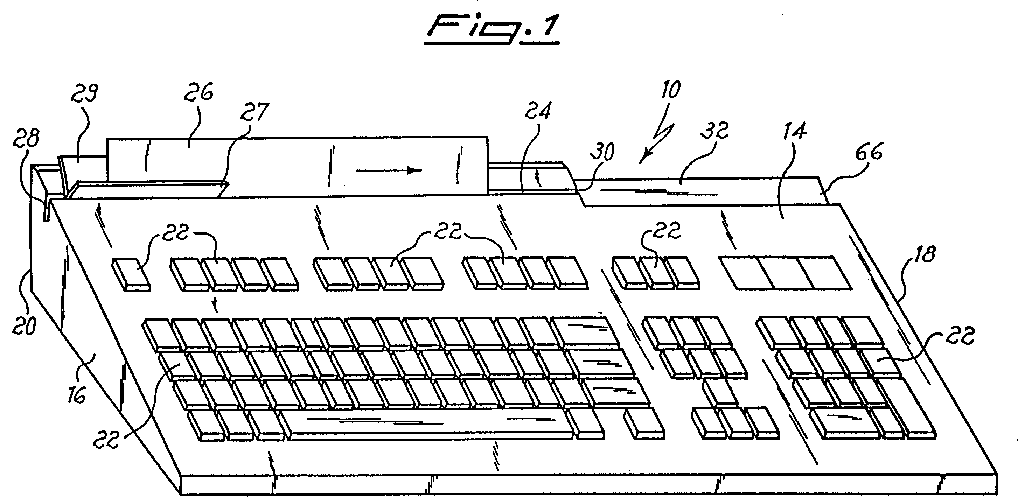

Referring to Figure 1, it can be seen that a keyboard 10 for an electronic processor comprises an external casing 12 operating as a protective housing formed by a front face 14 inclined forwards, a first side face 16, a second side face 18 and a rear face 20. The front face 14 supports a set of keys 22 which make up the control part of the said keyboard and at the top is provided with a linear slot 24 intended for the insertion of cheques 26 or similar documents, said cheques being entered by means of suitable guides 27 and 29 from the side 28 of the said slot 26 and, after being moved along by a mechanism located under the face 14 of the casing 12, emerge on the opposite side 30 inside a compartment or storage space 32 formed by lowering of the face 14 of the casing 12.

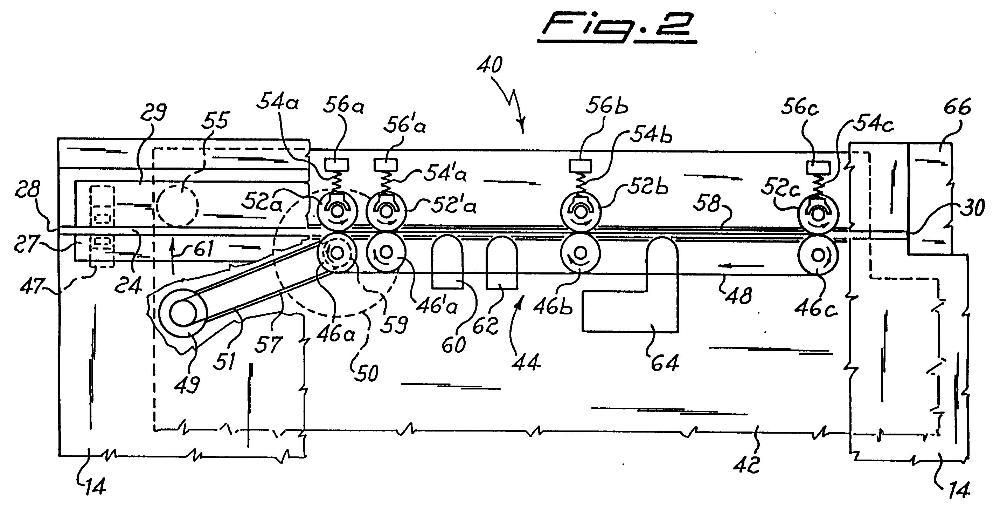

Figure 2 depictes the structure and operation of a cheque reader 40 housed under the front face 14 of the casing 12. This cheque reader 40, which is installed on a board 42 for printed circuits or on a frame, comprises a driving mechanism formed by a plurality of rollers 46ₐ, 46'ₐ, 46_{b}, 46_{c} connected by a drive belt 48 which ensures that they have substantially identical speeds of rotation, whereby one of these rollers (for example the roller 46ₐ) is actuated directly by an electric motor 50, for example fixed underneath the board 42 for the printed circuit of the keyboard or of the frame. The driven rollers 46ₐ, 46'ₐ, 46_{b} and 46_{c} have arranged opposite them idle rollers 52ₐ, 52'ₐ, 52_{b} and 52_{c} kept pressed against the corresponding rollers 46ₐ, 46'ₐ, 46_{b} and 46_{c} by springs 54ₐ, 54'ₐ, 54_{b} and 54_{c} resting against fixed guiding elements 56ₐ, 56'ₐ, 56_{b} and 56_{c} fastened to the said printed circuit board 42. The said board 42 also has installed on it a slide channel 58 which supports the cheque as it passes and protects it from contact with the plastic material of the said panel 42. Obviously the channel 58 is aligned exactly with the linear slot 24 formed on the face 14 of the casing 12 so that the cheque 26 does not encounter any obstacles on its travel path across the reader 40.

A mechanism for starting the movement of the cheque or document 26, when the latter is lowered down between the guides 27 and 29 into the slot 24, consists of an optical detector 47, for activating means for moving the cheque, a starting roller 49 installed at the end of an arm 51 which remains positioned against its corresponding idle roller 55 when it is made to rotate by means of a belt 57 actuated by a pulley 59 integral with the motorized roller 46ₐ and its arm 51 being moved, by friction with the spindle of the roller 46ₐ, in the direction of the arrow 61 so as to bring the starting roller 49 against the idle roller 55 in order to start the movement of the cheque or document 26. The roller 49 is moved away from the idle roller 55, after the cheque 26 has emerged from the channel 58, by means of reversal of the direction of rotation of the roller 46ₐ.

For reading the characters printed on the cheque or similar document, are used magnetic heads, such as a magnetizing head 60 and a reading head 62 or, additionally, may be used an optical head 64 which can be of the kind provided for reading alphanumeric characters or the like.

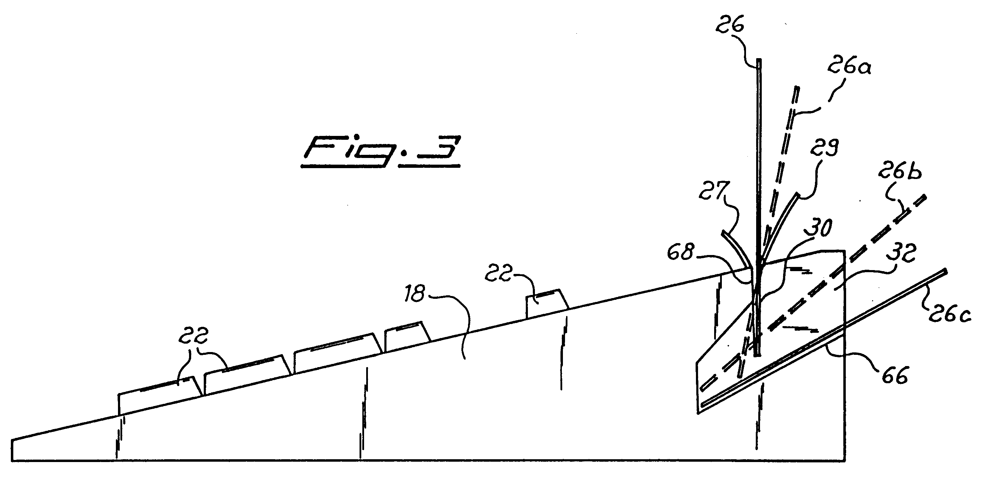

Let us refer now to Figure 3 which shows a view of the keyboard according to the present invention from the right-hand side, illustrating in particular the compartment or storage space 32 for the cheques which have been read and showing how the cheques expelled from the side 30 of the linear slot 24 fall onto a supporting surface or bottom 66 of the compartment 32, always falling onto their same side.

In order to fully understand how the cheques 26 are always made to fall onto their same side, let us look at what happens when a cheque 26, completely expelled from the slot 24, is situated above the compartment 32. Obviously, once expelled, the cheque 26 falls, touching with its bottom edge the bottom 66 of the compartment 32. Since this bottom surface 66 is inclined towards the left, the cheque moves downwards sliding on the said bottom surface 66 and, moving down, ends up with its left-hand side striking against an inclined profile 68 which projects over the bottom 66 of the compartment 32, being arranged ill the position denoted by the numeral 26ₐ. The cheque 66 then continues to fall, passing to the position 26_{b} and finally to the position 26_{c} where it lies resting on the bottom 66 of the said compartment 32. Each successive cheque is expelled in the same manner and falls onto the previous cheque present on the bottom, thus assuming the successive positions 26ₐ, 26_{b} and 26_{c} until it is stacked on top of the cheque previously expelled. Several cheques may be expelled in succession, being stacked so as to form a bunch which can be removed in its entirety when the number of cheques to be read by the reader according to the invention have been dealt with.

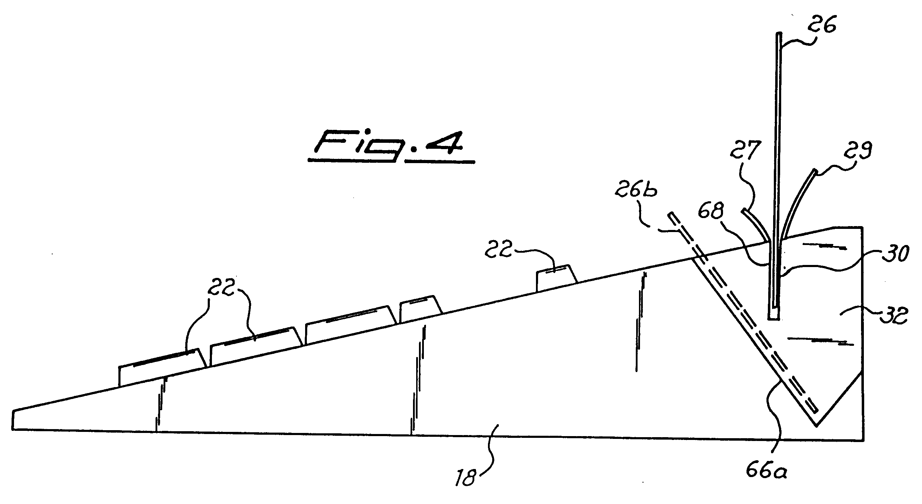

A further embodiment may be obtained by inclining the bottom 66a towards the right, as shown in Figure 4, the aforementioned principle remaining the same.

The above description depicteds a non-limiting embodiment of the present invention which is not to be regarded as the only possible embodiment of the said invention.

A person skilled in this particular art, from reading the description provided above, will be able to devise means and solutions which are obviously equivalent and which are all to be regarded as here covered. For example, the number of rollers 46_{a-c} may be different from the number three illustrated herein, the idle rollers 52_{a-c} may be connected together by a belt similar to the belt 48 which connects the rollers 46_{a-c}. In the same manner, the electric motor 50 may be arranged, not only underneath the roller 46ₐ with its spindle connected directly to the spindle of the said roller 46ₐ, but also with the spindle perpendicular, transmitting movement via a pair of bevel gears. There may also be variations in the number, kind and position of the reading heads 60, 62 and 64.

## Claims

1. Reader for cheques which is incorporated in a keyboard (10) for electronic processors and consists of a reading mechanism (40) housed on a printed' circuit board (42) or frame normally housing the circuit components of an electronic processor keyboard (10), characterized in that it is positioned inside a protective housing (12) of the said keyboard (10) underneath a linear slot (24) which starts from one side of the said keyboard (10) and ends on the other side, the reading mechanism (40) comprising a roller and belt driver (44), moved by a motor (50), and a reading head assembly (60-64).

2. Reader for cheques, as claimed in Claim 1, characterized in that the roller driver (44) comprises a plurality of rollers (46_{a-c}) actuated by a belt (48), one of which (46ₐ) is moved directly by a motor (50) and the others driven by the belt (48) which encompasses all of them, each of said driven rollers (46_{a-c}) being arranged opposite an idle roller (52_{a-c}) kept pressed resiliently against it, the said driver (44) having the duty of moving a cheque or similar document, keeping it substantially taut, at a substantially constant speed in front of the reading heads (60-64).

3. Reader for cheques, as claimed in Claim 2, characterized in that the reading mechanism (40) uses magnetic reading means (60, 62) consisting of a magnetizing head (60) and a reading head (62).

4. Reader for cheques, as claimed in Claim 3, characterized in that the reading mechanism (40) also uses possibly an optical head (64) for reading alphanumeric characters or the like.

5. Reader for cheques, as claimed in Claim 3, characterized in that the reading mechanism (40) uses simultaneously all the kinds of reading operation or some of them in various combinations.

6. Reader for cheques, as claimed in the preceding claims, characterized in that the slot (24) on the casing (12) corresponding to the drive mechanism (44) emerges inside a compartment or storage space (32) formed by means of a recess in the said casing (12), serving to accomodate the cheques (26) or similar documents following reading until subsequent removal for forwarding.

7. Reader for cheques, as claimed in Claim 6, characterized in that the compartment or storage space (32) is provided with a support surface (66, 66a), inclined towards the inside of the said keyboard (10), which gathers together the read documents (26).

8. Reader for cheques, as claimed in Claim 7, characterized in that the said compartment (32) has its support surface (66) located lower down with respect to the bottom of the linear slot (24) formed in the keyboard casing (12)
and is moreover provided with an inclined profile (68) which guides the document (26) expelled from the slot (24) such that it is positioned on the support surface (66).

9. Reader for cheques, as claimed in Claim 7, characterized in that the said compartment (32) has its support surface (66a) located lower down with respect to the bottom of the linear slot (24) formed in the keyboard casing (12) such that the document (26) is positioned on the support surface (66a) inclined in the opposite direction compared to the surface (66).
